# EUROPEAN PATENT SPECIFICATION

(11) **EP 1 864 893 B1**
(45) Date of publication and mention of the grant of the patent: **20.01.2010**
(21) Application number: 06017278.0
(22) Date of filing: 18.08.2006
(51) Int. Cl.: B62J 1/08, B62K 19/16

(54) **Seat tube for a bicycle**
Sattelstütze für Fahrrad
Tige de selle pour bicyclette

(30) Priority: 09.06.2006 CN 200620114838 U
(43) Date of publication of application: 12.12.2007
(73) Proprietor: Yuan Min An Enterprise Co., Ltd., Fong Yuan, Taichung, (TW)
(72) Inventor: Yu, Kuo-Pin, Fong Yuan, Taichung, (TW)
(74) Representative: Becker Kurig Straus

(56) References cited:
- US-A- 4 155 590
- US-A- 5 979 978
- US-A1- 2002 149 241
- US-B1- 6 213 488

## Description

### BACKGROUND OF THE INVENTION

### 1. Field of the Invention

The present invention relates to a bicycle and more particularly to such a seat tube having strong structure with light weight.

### 2. Description of the Related Art

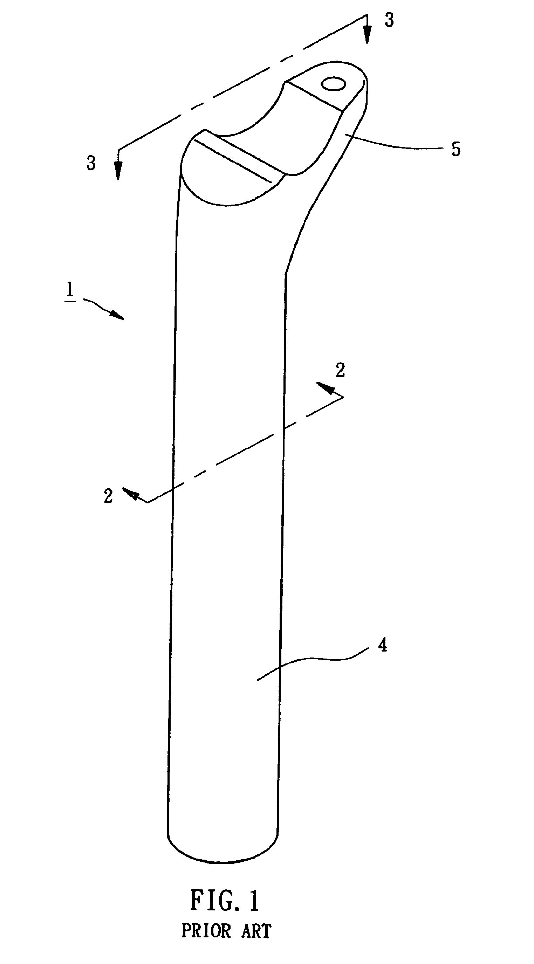

A conventional seat tube for a bicycle is made of metal. Recently, the bicycle is developed towards reducing its weight and adopts fiber reinforced material. As shown in FIG. **1****,** the seat tube **1** is made of carbon fiber reinforced resin. The seat tube **1** has an upright tube **4** and a head **5** which are manufactured by winding multiple layers of pre-pregs into an elongated tube having a closed end and an open end, placing the elongated tube into a die, inflating the elongated tube through the open end to make the elongated tube abut on an inner wall of the die, and curing the elongated tube.

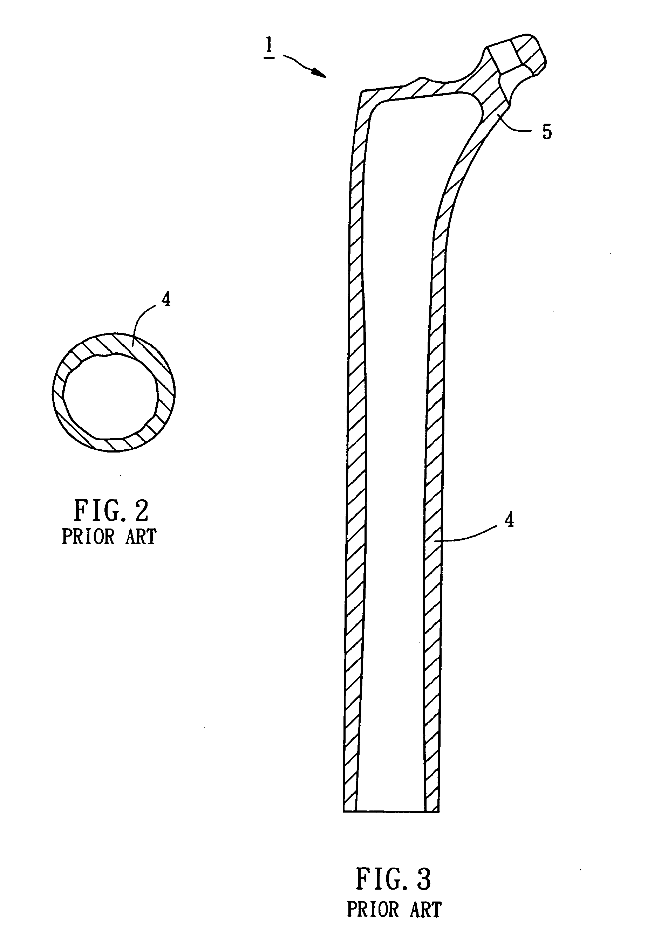

The inner wall of the seat tube **1** bears the air pressure during curing such that the shape of the inner wall is often irregular and the thickness of the inner wall is uneven, as shown in FIGS. **2-3****.** Therefore, the structure strength of the seat tube **1** is uneven and the structure failure is often generated at the weakness of the structure due to stress concentration. Besides, the outer wall of the seat tube **1** is restricted by the die, which has an inevitably manufacturing error, so that the shape of the outer wall of the upright tube **4** can not achieve a true circle. The upright tube **4** needs to be further trimmed to make the outer wall approach a true circle for conforming to the product standards. The trimming destroys the texture of the fibers and reduces the structure strength of the upright tube **4.** If the quantity of the pre-pregs used in the seat tube **1** is increase for enhancing the structure strength, the weight of the product is unintentionally increased. There is always a problem as how to reduce the weight of the seat tube and increase the structure strength at the same time.

A seat tube with all the features of the preamble of claim 1 is disclosed in the document US 5 979 978.

### SUMMARY OF THE INVENTION

The primary objective of the present invention is to provide a seat tube for a bicycle, which has high structure strength and light weight.

The other objective of the present invention is to provide a seat tube for a bicycle, which has an upright tube having a wall with even thickness.

The foregoing objectives of the present invention are attained by the seat tube includes an upright tube, a head and an inner tube which are all made of fiber reinforced material. The upright tube has an inserting portion at a top thereof. The head has an inside chamber and a sleeve portion at a bottom thereof. The sleeve portion of the head is sleeved onto the inserting portion of the upright tube such that the inside chamber of the head is communicated with an inside of the upright tube. An outer wall of the inserting portion of the upright tube is a taper face converging upward for inserting into the sleeve portion of the head. The inner tube is disposed at a junction of the upright tube and the head and interconnected with the upright tube and the head. Thus, the seat tube has strong structure with light weight.

### BRIEF DESCRIPTION OF THE DRAWINGS

FIG 1 is a perspective view of a conventional seat tube.
FIG 2 is a sectional view along the 2-2 line in FIG. 1.
FIG 3 is a sectional view along the 3-3 line in FIG. 1.
FIG. 4 is a perspective view of a first preferred embodiment of the present invention.
FIG 5 is a sectional view along the 5-5 line in FIG. 4.
FIG 6 is a sectional view along the 6-6 line in FIG. 4.
FIG 7 is a sectional view of a second preferred embodiment of the present invention.

### DETAILED DESCRIPTION OF THE INVENTION

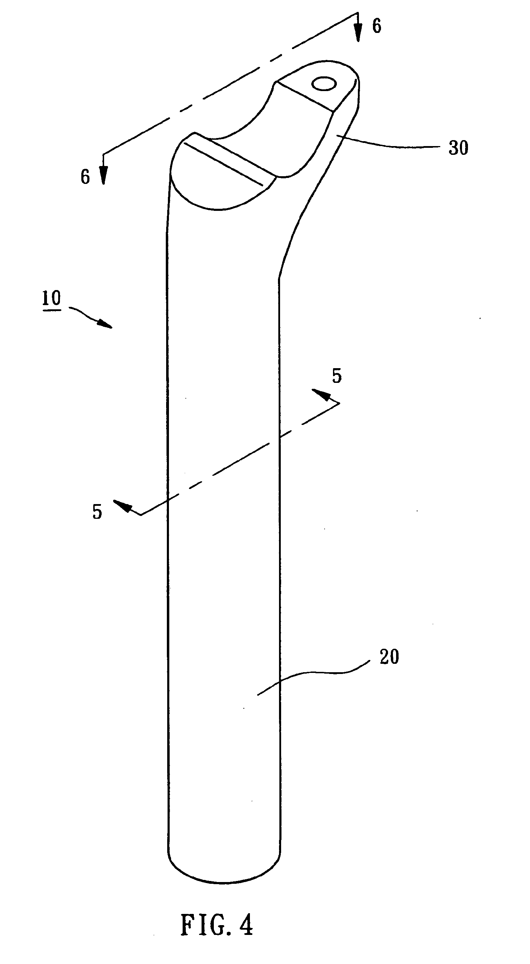

Referring to FIGS. **4-6****,** a seat tube **10** for a bicycle in accordance with the first embodiment of the present invention is shown comprised an upright tube **20,** a head **30** and an inner tube **40.**

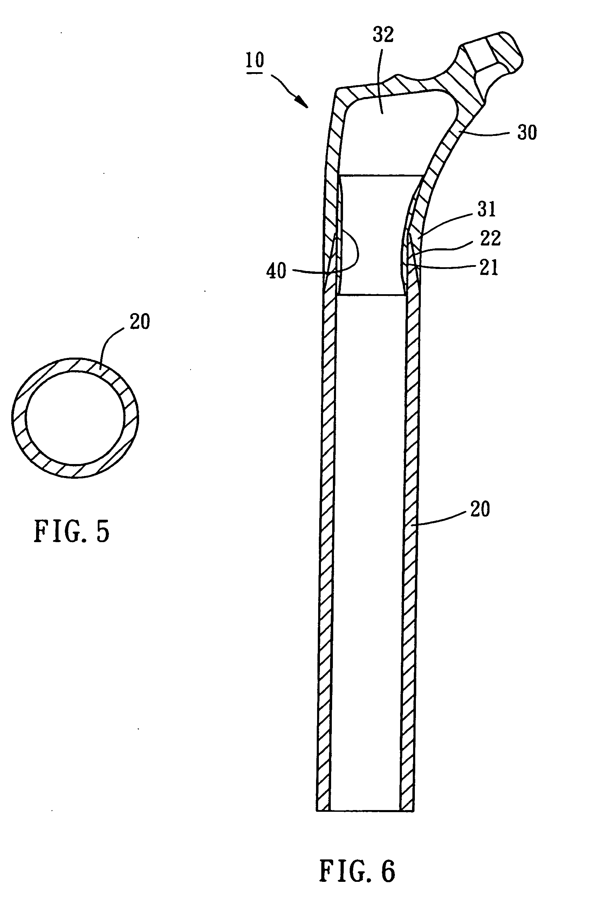

The upright tube **20** is made of fiber reinforced resin material. The fiber can adopt but not restrict to carbon fiber, glass fiber, boron fiber or Kevlar® fiber. The resin can adopt thermosetting resin or thermoplastic resin. The upright tube **20** is manufactured by winding multiple layers of pre-pregs onto a mandrel (not shown) and curing the pre-pregs. The inner wall of the upright tube **20** is restricted by the mandrel, which is a cylinder, so that the cross section of the inner wall is substantially a true circle as shown in FIG **5****.** The wall thickness of the upright tube **20** is uniform and the cross section of an outer wall of the upright tube **20** is substantially a true circle since the pre-pregs are wound onto the mandrel layer by layer, as shown in FIGS. **5-6****.** Perhaps the outer wall of the upright tube **20** needs to be trimmed very slightly to conform to product standards, but the trimming will not harm the fiber texture. The upright tube **20** has an inserting portion **21** at a top thereof. The outer wall of the inserting portion **21** of the upright tube **20** is a taper face **22** converging upward. The taper face **22** is formed right after the pre-pregs are wound or by trimming after the pre-pregs are cured.

The head **30** is made of fiber reinforced resin material. The head **30** is manufactured by winding multiple layers of pre-pregs into an embryo having a bottom sleeved onto the inserting portion **21** of the upright tube **20** such that the bottom forms a sleeve portion **31** joining the head **30** and the upright tube **20** together. The inner tube **40** is formed by winding multiple layers of pre-pregs at the junction of the head **30** and the upright tube **20** to join the head **30** and the upright tube **20** more firmly. The head **30** has an inside chamber **32** communicating with an inside of the upright tube **20.** Then, place the head **30** and the top of the upright tube **20** into a die (not shown), inflate the head **30** through the bottom of the upright tube **20** to make the head **30** abut on an inner wall of the die, and cure the head **30** and the inner tube **40** to join the head **30** and the upright tube **20** together. The outer periphery of the head **30** is substantially in line with the outer periphery of the upright tube **20.**

Since the cross sections of the inner wall and the outer wall of the upright tube **20** are substantially true circles and the wall thickness of the upright tube **20** is uniform, the effect of the stress concentration in the prior art can be avoided. Therefore the structure strength of the seat tube **10** can be improved. Furthermore, under the premise that the structure strength of the seat tube **10** is enough, the quantity of the pre-pregs used in the seat tube **10** can be reduced such that the weight of the seat tube **10** can be decreased to achieve the foresaid objectives of the present invention.

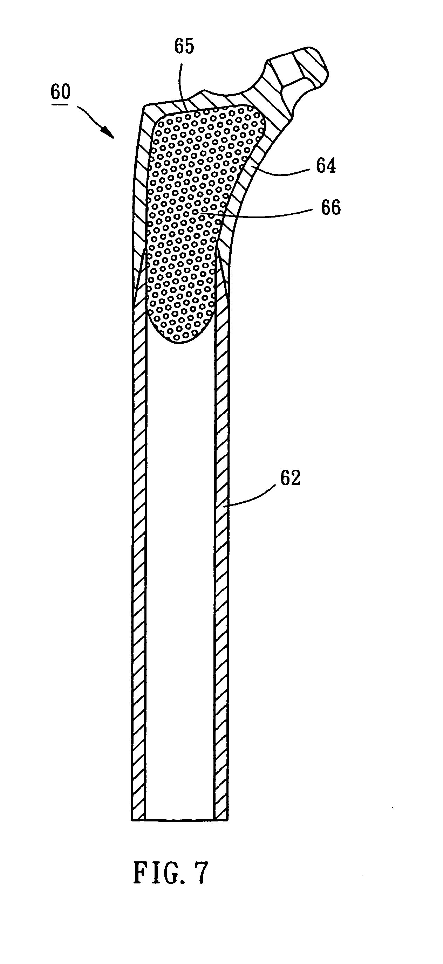

The structure of the seat tube has alternatives without departing from the spirit of the present invention. For example, as shown in FIG. **7****,** a seat tube **60** for a bicycle in accordance with the second embodiment of the present invention is shown comprised an upright tube **62,** a head **64** mounted on a top of the upright tube **62,** and a foamed core **66** filled in an inside chamber **65** of the head **64.** When the head **64** is cured in a die (not shown), there is no need to inflating the head **64** since foamed core **66** will expand to make the head **64** abut on the inner wall of the die.

In practice, either the foamed core or high pressure air can be used to make the head abut on the inner wall of the die. The quantity of the foamed core can be reduced when high pressure air is used cooperatively. The shape of the head can be altered according to the structure of the chair. Although particular embodiments of the invention have been described in detail for purposes of illustration, various modifications and enhancements may be made without departing from the spirit and scope of the invention.

## Claims

1. A seat tube for a bicycle, comprising:
an upright tube (20) made of fiber reinforced material; and
a head (30) made of fiber reinforced material and having an inside chamber (32);
wherein the upright tube (20) has an inserting portion (22) at a top thereof, and the head (30) has a sleeve portion (31) at a bottom thereof; wherein the sleeve portion (31) of the head (30) is sleeved onto the inserting portion (21) of the upright tube (20) such that the inside chamber (32) of the head (30) is communicated with an inside of the upright tube (20),
**characterized in that** the seat tube (10) further comprises an inner tube (40) disposed at a junction of the upright tube (20) and the head (30) and interconnected with the upright tube (20) and the head (30).

2. The seat tube for a bicycle as claimed in claim 1, **characterized in that** the seat tube (60) further comprises a foamed core (66) filled in the inside chamber (65) of the head (64).

3. The seat tube for a bicycle as claimed in claim 1, **characterized in that** an outer wall of the inserting portion (21) of the upright tube (20) is a taper face (22) converging upward.

4. The seat tube for a bicycle as claimed in claim 1, **characterized in that** a cross section of an inner wall of the upright tube (20) is substantially a true circle.

5. The seat tube for a bicycle as claimed in claim 1, **characterized in that** a cross section of an outer wall of the upright tube (20) is substantially a true circle.

## Patentansprüche

1. Sitzflächenrohr für ein Fahrrad, umfassend:
ein aufrecht stehendes Rohr (20), das aus einem mit Faser verstärktem Material hergestellt ist, und
einen Kopf (30), der aus einem mit Faser verstärktem Material hergestellt ist und eine Innenkammer (32) aufweist,
worin das aufrecht stehende Rohr (20) an einem oberen Ende davon einen Einbringbereich (22) aufweist, und wobei der Kopf (30) an einem unteren Bereich davon einen Manschettenbereich (31) aufweist, worin der Manschettenbereich (31) des Kopfes (30) auf den Einbringbereich (21) des aufrecht stehenden Rohres (20) aufgesetzt ist, so dass die Innenkammer (32) des Kopfes (30) mit einem Inneren des aufrecht stehenden Rohres (20) verbunden ist,
**dadurch gekennzeichnet, dass** das Sitzflächenrohr (10) weiterhin ein Innenrohr (40) umfasst, das an einer Verbindung des aufrecht stehenden Rohrs (20) und des Kopfes (30) angeordnet und mit dem aufrecht stehenden Rohr (20) und dem Kopf (30) verbunden ist.

2. Sitzflächenrohr für ein Fahrrad nach Anspruch 1, **dadurch gekennzeichnet, dass** das Sitzflächenrohr (60) weiterhin einen geschäumten Kern (66) umfasst, der in die Innenkammer (65) des Kopfes (64) gefüllt vorliegt.

3. Sitzflächenrohr nach Anspruch 1, **dadurch gekennzeichnet, dass** eine Außenwand des Einbringbereichs (21) des aufrecht stehenden Rohrs (20) eine nach oben zusammenlaufende kegelförmige Wand (22) ist.

4. Sitzflächenrohr für ein Fahrrad nach Anspruch 1, **dadurch gekennzeichnet, dass** ein Querschnitt einer Innenwand des aufrecht stehenden Rohrs (20) im Wesentlichen kreisförmig ist.

5. Sitzflächenrohr für ein Fahrrad nach Anspruch 1, **dadurch gekennzeichnet, dass** ein Querschnitt einer Außenwand des aufrecht stehenden Rohrs (20) im Wesentlichen kreisförmig ist.

## Revendications

1. Une tige de siège pour une bicyclette comprenant :
un tube droit (20) fait de matériau en fibre renforcé ; et
une tête (30) faite de matériau en fibre renforcé et comportant une chambre interne (32)
dans laquelle le tube droit (20) comporte une portion d'insertion (22) à son sommet et la tête (30) comporte une portion de douille (31) à sa base, dans lequel la portion de douille (31) de la tête (30) est gainée sur la portion d'insertion (21) du tube droit (20) de façon telle que la chambre d'insertion (32) de la tête (30) est en communication avec l'intérieur du tube droit (20),
**caractérisée en ce que** la tige de siège (10) comprend en outre un tube interne (40) disposé à une jonction du tube droit (20) et de la tête (30) et interconnecté avec le tube droit (20) et la tête (30).

2. La tige de siège pour bicyclette tel que revendiquée dans la revendication 1 **caractérisée en ce que** la tige de siège (60) comprend en outre un noyau de mousse (66) inséré dans la chambre interne (65) de la tête (64).

3. La tige de siège pour bicyclette tel que revendiquée dans la revendication 1 **caractérisée en ce qu'**une paroi externe de la portion d'insertion (21) du tube droit (20) est une surface conique (22) convergeant vers le haut.

4. La tige de siège pour bicyclette tel que revendiquée dans la revendication 1 **caractérisée en ce qu'**une section d'une paroi interne du tube droit (20) est sensiblement un cercle parfait.

5. La tige de siège pour bicyclette tel que revendiquée dans la revendication 1 **caractérisée en ce qu'**une section d'une paroi externe du tube droit (20) est sensiblement un cercle parfait.
